# EUROPEAN PATENT APPLICATION

(11) **EP 3 438 513 A1**
(43) Date of publication of application: **06.02.2019**
(21) Application number: 17775370.4
(22) Date of filing: 30.03.2017
(51) Int. Cl.: F16K 1/38, F16K 1/42

(54) **CONTROL VALVE**

(30) Priority: 01.04.2016 JP 2016073923
(71) Applicant: Valeo Japan Co., Ltd., Saitama 360-0193 (JP); TGK CO., Ltd., Tokyo 193-0942 (JP)
(72) Inventor: SAKAMOTO, Katsumi, Kumagaya-shi Saitama 360-0193 (JP); KOJIMA, Ryo, Kumagaya-shi Saitama 360-0193 (JP); MATSUMOTO, Yasuhiro, Kumagaya-shi Saitama 360-0193 (JP); WAKABAYASHI, Akinobu, Hachioji-shi Tokyo 193-0942 (JP); ISHIBE, Yuzo, Hachioji-shi Tokyo 193-0942 (JP); SAKAKIBARA, Hidekazu, Hachioji-shi Tokyo 193-0942 (JP); IIDA, Wataru, Hachioji-shi Tokyo 193-0942 (JP)
(74) Representative: Prinz & Partner mbB
(86) International application number: PCT/JP2017/013180
(87) International publication number: WO 2017/170836

(57) **Abstract**

A control valve (1) includes: a body (10) including a valve chamber (18), a valve hole (24) communicating with the valve chamber (18) in an axial direction, and a port (14) through which fluid is introduced into the valve chamber (18); a valve seat (32) provided at an open end of the valve hole (24); and a valve element (38) that has an outer surface extending in the axial direction, and touches and leaves the valve seat (32) from the valve chamber (18) side to close and open a valve section. The valve seat (32) has a tapered valve seat surface (35) that is inclined with respect to an axis of the valve hole (24). The valve element (38) has a valve element surface (39) facing the valve seat surface (35) in the axial direction, and touches and leaves the valve seat surface (35) at a position away from an inner end of the valve seat surface (35). An angle between the valve element surface (39) and the valve seat surface (35) is 10 degrees or smaller at downstream of a touching/leaving point (P) of the valve element (38).

## Description

### Technical Field

The present invention relates to a control valve, and in particular to a structure for preventing or minimizing wear of a valve section.

### Background Art

An automotive air conditioner typically includes refrigerant circulation passages in which a compressor, a condenser, an evaporator, and so forth are arranged. Various control valves are provided for switching of these refrigerant circulation passages, regulating the flow rate of refrigerant, and the like (refer, for example, to Patent Literature 1). Such a control valve includes an actuating rod slidably supported by a body, and a valve element integrally provided with the actuating rod. The actuating rod is driven in the axial direction by an actuator integrally provided with the body, to operate the valve element in opening and closing directions of a valve section. Most of refrigerant introduced while the valve is open is delivered in the axial direction along the outer surface of the actuating rod and passes through a valve hole.

### Citation List

### Patent Literature

Patent Literature 1: JP H11-287354 A

### Summary of Invention

### Technical Problem

Refrigerant discharged from the compressor, however, may contain foreign materials such as metal powder. The foreign materials are caused by wear around a piston of the compressor, or the like. When such foreign materials enter the control valve, the foreign materials are likely to flow along a wall surface of the actuating rod and hit a valve seat. In particular, foreign materials that directly hit a point where the valve element touches and leaves the valve seat cause erosion around the point, which causes such problems as leakage from the valve while the valve is closed. There is also a problem of cavitation caused by liquid refrigerant passing through the valve section at high speed, which may cause erosion. Such problems are not limited to control valve for air conditioners but can occur in control valves applied to devices with working fluid containing solid particles.

One of objects of the present invention is to provide a structure that prevents or minimizes wear of a valve section of a control valve.

### Solution to Problem

A control valve according to an aspect of the present invention includes: a body including a valve chamber, a valve hole communicating with the valve chamber in an axial direction, and an inlet port through which fluid is introduced into the valve chamber; a valve seat provided at an open end of the valve hole; and a valve element that has an outer surface extending in the axial direction, and touches and leaves the valve seat from the valve chamber side to close and open a valve section.

The valve seat has a tapered valve seat surface that is inclined with respect to an axis of the valve hole. The valve element has a valve element surface facing the valve seat surface in the axial direction, and touches and leaves the valve seat surface at a position away from an inner end of the valve seat surface. An angle between the valve element surface and the valve seat surface is 10 degrees or smaller at downstream of a touching/leaving point of the valve element.

In the control valve according to the aspect, the touching/leaving point of the valve element is near an outer end of the valve element surface, which is away from the inner end of the valve seat surface. With such a structure, the angle between the valve element surface and the valve seat surface is 10 degrees or smaller at the downstream of the touching/leaving point. This suppresses the flow rate near the touching/leaving point under steady control, as will be described in an embodiment below. As a result, occurrence of erosion at the touching/leaving point is prevented or minimized, and leakage from the valve is prevented or minimized.

### Advantageous Effects of Invention

According to the present invention, a structure that prevents of minimizes wear of a valve section of a control valve is provided.

### Brief Description of Drawings

FIG. 1 is a cross-sectional view illustrating a structure of a control valve according to an embodiment.
FIG. 2 is a partially-enlarged cross-sectional view of an upper part of FIG. 1.
FIG. 3 illustrates detailed views of a valve section.
FIG. 4 illustrates graphs showing the relations of the angles of a valve element surface and a valve seat surface and prevention of erosion.
FIG. 5 is a graph showing results of experiments showing the relation between the flow rate of refrigerant passing through the valve section and the degree of damage on the valve.

### Description of Embodiments

An embodiment of the present invention will now be described in detail with reference to the drawings. In the description below, for convenience of description, the positional relationship in each structure may be expressed with reference to how the structure is depicted in the drawings.

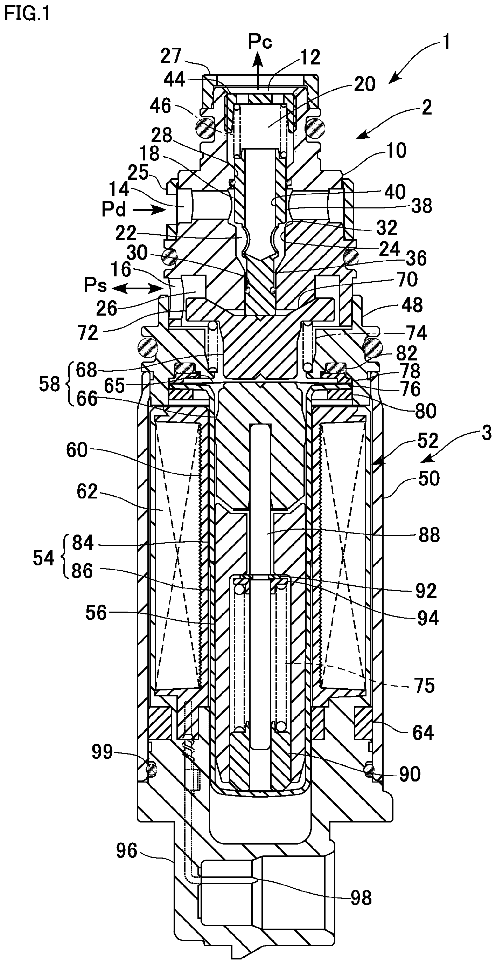

FIG. 1 is a cross-sectional view illustrating a structure of a control valve according to the embodiment.

The control valve 1 is structured as an electromagnetic valve for controlling the discharging capacity of a variable displacement compressor (also referred to simply as a "compressor") that is installed in a refrigeration cycle of an automotive air conditioner. The compressor compresses refrigerant flowing through the refrigeration cycle into a high-temperature and high-pressure gaseous refrigerant, and discharges the compressed gaseous refrigerant. The gaseous refrigerant is condensed by a condenser (external heat exchanger) and then adiabatically expanded by an expander into a low-temperature and low-pressure spray of refrigerant. The low-temperature and low-pressure refrigerant is evaporated by an evaporator, and the air inside the vehicle is cooled by the evaporative latent heat. The refrigerant evaporated by the evaporator is returned to the compressor and thus circulates through the refrigeration cycle.

The compressor includes a wobble plate to which a piston for compression is connected. The angle of the wobble plate is changed to change the stroke of the piston and to thus regulate the refrigerant discharging rate. The control valve 1 controls the flow rate of refrigerant introduced from a discharge chamber to a control chamber of the compressor to change the angle of the wobble plate and thus the discharging capacity of the compressor. Although the control chamber in the present embodiment is a crankcase, the control chamber may alternatively be a pressure chamber separately provided in or outside of the crankcase in a modification. An alternative for chlorofluorocarbon (HFC-134a), for example, is used as the refrigerant. Alternatively, another refrigerant (such as HFO-1234yf) may be used. Still alternatively, a refrigerant such as carbon dioxide with high working pressure may be used. In this case, an external heat exchanger such as a gas cooler may be provided instead of the condenser in the refrigeration cycle.

The control valve 1 includes a valve section in a refrigerant passage through which a discharge chamber and the control chamber of the compressor communicate with each other, to control the flow rate of refrigerant introduced from the discharge chamber into the control chamber. An orifice or the like for releasing refrigerant in the control chamber into a suction chamber is also formed between the control chamber and the suction chamber, which is not illustrated and detailed description of which is omitted. The control valve 1 is a so-called Ps sensing valve for controlling the flow rate of refrigerant to be introduced from the discharge chamber to the control chamber, so as to keep a suction pressure Ps of the compressor at a preset pressure. The control valve 1 is formed of an integral assembly of a valve unit 2 and a solenoid 3. The valve unit 2 has a body 10 having a stepped cylindrical shape, and a valve section formed inside the body 10.

The body 10 has ports 12, 14, and 16 formed in this order from a top end thereof. The port 14 is a "discharge chamber communication port" communicating with the discharge chamber and functioning as an "inlet port" through which a discharge pressure Pd is introduced from the discharge chamber. A valve chamber 18 is formed on an inner side of the port 14.

The port 12 is a "control chamber communication port" communicating with the control chamber and functioning as an "outlet port" through which refrigerant at a control pressure Pc having passed through the valve section is delivered toward the control chamber. A pressure chamber 20 is formed on an inner side of the port 12. An intermediate chamber 22 is formed on a side opposite to the pressure chamber 20 with respect to the valve chamber 18. The intermediate chamber 22 communicates with the pressure chamber 20 via an inner passage 40 of an actuating rod 36, which will be described later. A valve hole 24 is formed in an upper end opening of the intermediate chamber 22. The port 16 is a "suction chamber communication port" communicating with the suction chamber. A suction pressure Ps in the suction chamber is introduced through the port 16. A working chamber 26 is formed on an inner side of the port 16.

A filter member 25 is provided to cover the port 14. The filter member 25 includes a mesh for preventing or reducing entry of foreign materials such as metal powder contained in the discharged refrigerant into the valve chamber 18. A filter member 27 is also provided to cover the port 12. The filter member 27 includes a mesh for preventing or reducing entry of foreign materials contained in the refrigerant in the control chamber into the pressure chamber 20.

The body 10 has a first guiding passage 28 connecting the valve chamber 18 and the pressure chamber 20 with each other, and a second guiding passage 30 connecting the intermediate chamber 22 and the working chamber 26 with each other. The first guiding passage 28 and the second guiding passage 30 are coaxial in the axial direction. A lower part of the intermediate chamber 22 is tapered with gradually decreasing diameter, and communicates with the second guiding passage 30. A valve seat 32 is formed integrally with the body 10 at an open end of the valve hole 24 on the side of the valve chamber 18. The elongated actuating rod 36 is inserted in the body 10 along the axis.

The actuating rod 36 has a stepped columnar shape. One end of the actuating rod 36 is slidably supported in the first guiding passage 28, and the other end thereof is slidably supported in the second guiding passage 30. A valve element 38 is formed integrally with an intermediate portion of the actuating rod 36 in the axial direction. The valve element 38 has a cylindrical shape with an outer surface extending in the axial direction. The valve element 38 touches and leaves the valve seat 32 from the side of the valve chamber 18 to close and open the valve section. The actuating rod 36 has the inner passage 40 formed in an upper half portion thereof. A lower end of the inner passage 40 communicates with the intermediate chamber 22. Refrigerant having been introduced through the port 14 and passed through the valve hole 24 (valve section) is guided into the inner passage 40 and delivered into the pressure chamber 20.

A spring support 44 is screwed into an upper end opening of the body 10. A spring 46 is disposed between the spring support 44 and the actuating rod 36. The spring 46 biases the valve element 38 in the valve closing direction. The load of the spring 46 can be adjusted by changing the amount by which the spring support 44 is screwed in the body 10.

The valve unit 2 and the solenoid 3 are connected with each other with a cylindrical connecting member 48 therebetween. The connecting member 48 is made of a magnetic material. A lower end portion of the body 10 is press-fitted into an upper end portion of the connecting member 48, and an upper end portion of a case 50 is press-fitted to a lower end portion of the connecting member 48. The working chamber 26 is formed in a space surrounded by the body 10, the connecting member 48, and the solenoid 3.

The solenoid 3 includes the case 50 having a cylindrical shape, a molded coil 52 provided in the case 50, a sleeve 54 having a bottomed cylindrical shape inserted in the molded coil 52, a core 56 fixed in the sleeve 54, and a plunger 58 positioned to face the core 56 in the axial direction. The molded coil 52 includes a bobbin 60 having a cylindrical shape, and an electromagnetic coil 62 wound around the bobbin 60. A ring-shaped plate 64 is molded at a lower end portion of the molded coil 52. The plate 64 is made of a magnetic material, and constitutes a yoke with the case 50. A lower end portion of the case 50 is swaged to fix the molded coil 52, and an upper end of the case 50 is swaged to be fixed to the connecting member 48.

The plunger 58 is constituted by two plungers separated with a thin diaphragm 65 therebetween. A first plunger 66, which is one of the two plungers, is located inside the molded coil 52, and a second plunger 68, which is the other thereof, is located in the working chamber 26. The diaphragm 65 seals off an upper end opening of the sleeve 54 to form a reference pressure chamber in the sleeve 54. While the reference pressure chamber is in a vacuum state in the present embodiment, the reference pressure chamber may alternatively be filled with air. The diaphragm 65 is a flexible pressure-sensing member made of a laminate of a plurality of polyimide films. In a modification, a metal diaphragm may be used as the diaphragm 65.

A recess 70 is formed in the middle of an upper face of the second plunger 68. A flat face at the center of the recess 70 comes in contact with a lower end face of the actuating rod 36. The second plunger 68 supports the actuating rod 36 from below in such a manner that the second plunger 68 and the actuating rod 36 can touch and leave each other. A flange portion 72 extending radially outward is formed at an upper end of the second plunger 68. A lower face of the flange portion 72 faces an upper face of the connecting member 48 in the axial direction. Thus, suction force in the axial direction is produced between the flange portion 72 and the connecting member 48 when power is supplied to the solenoid 3, which enables the valve element 38 to be quickly displaced in the valve closing direction. A stepped portion is formed on an inner side of the connecting member 48. A spring 74 is disposed between the stepped portion and the second plunger 68. The spring 74 has a spring force greater than that of the spring 46, and biases the valve element 38 in the valve opening direction.

An assembly in which the first plunger 66, the core 56, and a spring 75 are contained in the sleeve 54 and an opening of the sleeve 54 is sealed off by the diaphragm 65 is located below the second plunger 68. Specifically, a flange portion 76 extending radially outward is formed at an upper end opening of the sleeve 54. The diaphragm 65 is held between the flange portion 76 and an annular plate 78. The flange portion 76 and the plate 78 are joined by welding along the circumferences thereof. The assembly is fixed to the connecting member 48, and thus to the body 10, in such a manner that an upper end of the assembly is inserted into a lower end opening of the connecting member 48, and an annular member 80 is then press-fitted from below. An O-ring 82 for sealing is disposed between a lower end face of the connecting member 48 and the plate 78.

The sleeve 54 is constituted by an upper portion 84 made of a nonmagnetic material and a lower portion 86 made of a magnetic material, which are welded together. The core 56 is press-fitted into the lower portion 86 of the sleeve 54, and the first plunger 66 is located in the upper portion 84 such that the first plunger 66 is movable back and forth in the axial direction.

A shaft 88 is provided to extend along the center of the core 56 in the axial direction. The first plunger 66 is press-fitted to one end of the shaft 88. The other end of the shaft 88 is supported by a shaft support member 90 press-fitted into a lower end portion of the core 56. A retaining ring 92 is fitted to an intermediate position of the shaft 88. A spring support 94 is provided such that the upward movement of the spring support 94 is restricted by the retaining ring 92. The spring 75 is disposed between the spring support 94 and the shaft support member 90. The spring 75 biases the first plunger 66 via the shaft 88 in a direction away from the core 56. The load of the spring 75 can be adjusted by changing the position of the shaft support member 90 in the axial direction by pressing the bottom of the sleeve 54 from outside so that the bottom of the sleeve 54 is deformed at the point when the solenoid 3 is mounted.

An end member 96 is provided to seal off the inside of the solenoid 3 from below. The end member 96 is made of a corrosion-resistant resin (plastic) material, and formed integrally with the molded coil 52. The end member 96 also functions as a connector in which one end of a terminal 98 connected with the electromagnetic coil 62 is exposed. The terminal 98 is connected with an external power supply, which is not illustrated. An O-ring 99 for sealing is also provided between the end member 96 and the case 50 so as to prevent entry of foreign materials from outside.

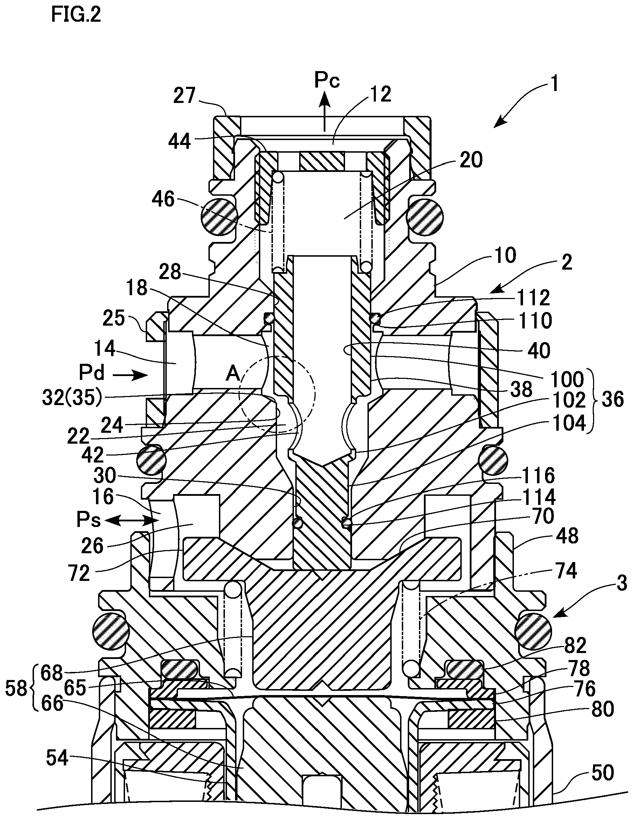

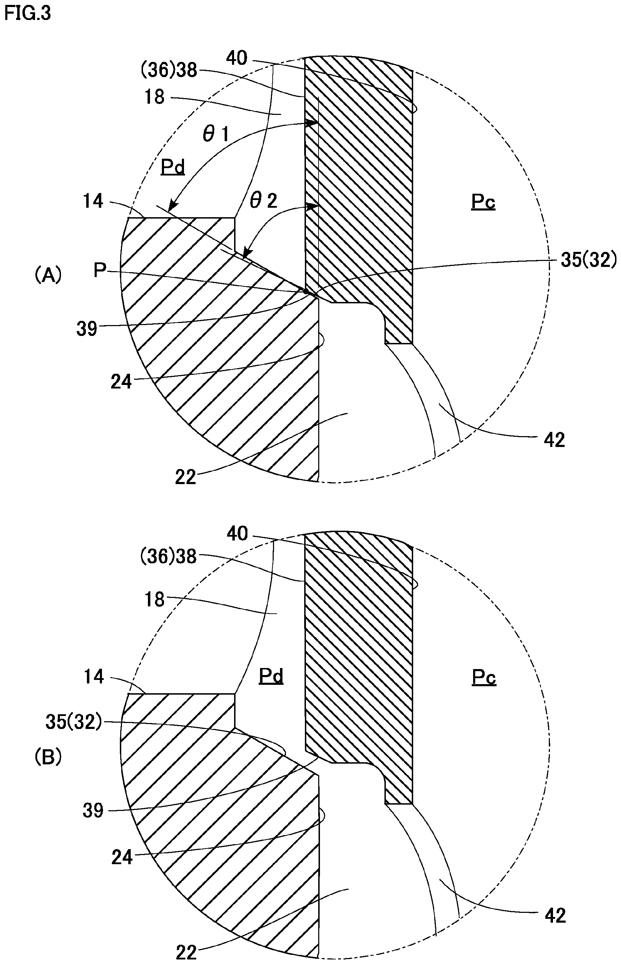

FIG. 2 is a partially-enlarged cross-sectional view of an upper part of FIG. 1. FIG. 3 illustrates detailed views of the valve section, which are enlarged views of part A in FIG. 2. FIG. 3(A) illustrates a closed state of the valve section, and FIG. 3(B) illustrates an open state of the valve section.

As illustrated in FIG. 2, the actuating rod 36 has a stepped columnar shape having a large-diameter portion 100, a medium-diameter portion 102, and a small-diameter portion 104 in this order from the top to the bottom. The large-diameter portion 100 is slidably supported in the first guiding passage 28, and the small-diameter portion 104 is slidably supported in the second guiding passage 30. The valve element 38 is provided integrally with the large-diameter portion 100. The medium-diameter portion 102 extends through the valve hole 24. The medium-diameter portion 102 has a communication hole 42 open at lateral sides thereof. The communication hole 42 allows the inner passage 40 and the intermediate chamber 22 to communicate with each other.

Thus, the actuating rod 36 is stably supported at two, upper and lower points. Furthermore, since the valve element 38 is located at an intermediate position between the two supports, inclination of the valve element 38 with respect to the axis of the valve hole 24 is prevented or minimized, and the possibility of occurrence of hysteresis in the valve opening characteristics of the valve section is very low. In addition, leakage of refrigerant at the valve section due to inclination of the valve element is prevented or minimized. Consequently, good valve opening characteristics of the valve section is maintained.

The passage including the first guiding passage 28, the valve hole 24, and the second guiding passage 30 is formed in a stepped circular hole with the inner diameter decreasing downward in a stepwise manner to conform to the shape of the actuating rod 36. A tapered surface with the diameter increasing upward is formed at an upper end opening of the valve hole 24, which corresponds to a valve seat surface 35 of the valve seat 32. A tapered surface with the diameter increasing upward is also formed between the valve hole 24 and the second guiding passage 30.

A first seal accommodating part 110, which is an annular recessed groove, is formed at a lower portion of the first guiding passage 28, and an O-ring 112 is fitted thereinto. The O-ring 112 seals a gap between the actuating rod 36 and the first guiding passage 28 to restrict leakage of refrigerant from the valve chamber 18 into the pressure chamber 20. In addition, a second seal accommodating part 114, which is an annular recessed groove, is formed at the small-diameter portion 104 of the actuating rod 36, and an O-ring 116 is fitted thereinto. The O-ring 116 seals a gap between the actuating rod 36 and the second guiding passage 30 to restrict leakage of refrigerant from the intermediate chamber 22 into the working chamber 26.

As illustrated in FIG. 3, the valve seat 32 has the valve seat surface 35 having a tapered shape (inverted cone shape). The valve seat surface 35 has a first angle of inclination θ1 with respect to the axial direction. In contrast, the valve element 38 has a valve element surface 39 having a tapered shape (cone shape) facing the valve seat surface 35 in the axial direction. The valve element surface 39 has a second angle of inclination θ2 with respect to the axial direction. The second angle of inclination θ2 is slightly larger than the first angle of inclination θ1. Such a structure allows the valve element 38 to touch and leave the valve seat surface 35 at a position away from an inner end of the valve seat surface 35. A position near an outer end of the valve element surface 39 corresponds to a touching/leaving point P at which the valve element 38 and the valve seat 32 touch and leave each other.

In the present embodiment, the first angle of inclination θ1 is 60 degrees, and the second angle of inclination θ2 is 65 degrees. Thus, the angle difference between the first angle of inclination θ1 and the second angle of inclination θ2 (that is, the angle between the valve element surface 39 and the valve seat surface 35) is set to 5 degrees. More specifically, a dimensional tolerance of about 2 degrees is considered, the first angle of inclination θ1 is set to between 58 degrees and 62 degrees, and the second angle of inclination θ2 is set to between 63 degrees and 67 degrees. Thus, the angle difference is set to 10 degrees or smaller (preferably between 3 degrees and 8 degrees). Such angular setting allows effective prevention or reduction of erosion at the touching/leaving point P of the valve seat 32, as will be described later.

Next, the operation of the control valve 1 will be described with reference to FIG. 1.

In the control valve 1, when the solenoid 3 is powered off, that is, when the automotive air conditioner is not in operation, the suction force does not act between the core 56 and the plunger 58. In addition, since the suction pressure Ps is high, the first plunger 66 in contact with the diaphragm 65 is displaced downward against the load of the spring 75. In the meantime, since the second plunger 68 is biased upward away from the first plunger 66 by the spring 74, the plunger 68 biases the valve element 38 via the actuating rod 36 to a fully open position. In this process, the refrigerant at the discharge pressure Pd introduced from the discharge chamber of the compressor into the port 14 passes through the fully-open valve section and flows from the port 12 to the control chamber. The control pressure Pc thus increases, and the compressor performs operation with minimum capacity.

In contrast, when control current is supplied to the electromagnetic coil 62, such as at the startup of the automotive air conditioner, the first plunger 66 sucks (pulls) the second plunger 68 via the diaphragm 65 against the biasing force of the spring 74. The second plunger 68 thus moves downward by being sucked and coming into contact with the diaphragm 65, the valve element 38 is pressed downward by the spring 46 and touches the valve seat 32 accordingly, and the valve section thus becomes fully closed. At this point, the actuating rod 36 is away from the second plunger 68.

When the suction pressure Ps in the suction chamber becomes sufficiently low in this manner, the diaphragm 65 senses the suction pressure Ps and is displaced upward, and the second plunger 68 comes into contact with the actuating rod 36. At this point, when the control current supplied to the electromagnetic coil 62 is lowered depending on the preset temperature of the air conditioning, the second plunger 68 and the first plunger 66 integrally move upward, in a state in which the second plunger 68 and the first plunger 66 are attached by suction to each other, to a position where the suction pressure Ps, the loads of the springs 46, 74, and 75, and the suction force of the solenoid 3 are balanced. Thus, the valve element 38 is pressed upward by the second plunger 68 and separated from the valve seat 32, and the valve section is set to a predetermined opening degree. The refrigerant at the discharge pressure Pd is thus controlled at a flow rate depending on the opening degree, and introduced into the control chamber, and the compressor switches to operation with a capacity depending on the control current.

When the control current supplied to the electromagnetic coil 62 is constant, the diaphragm 65 senses the suction pressure Ps and controls the valve opening degree. When the refrigeration load is increased and the suction pressure Ps becomes higher, the valve element 38 is displaced downward integrally with the actuating rod 36, the second plunger 68, the diaphragm 65, and the first plunger 66, the valve opening degree thus becomes smaller, and the compressor operates to increase the discharging capacity. As a result, the suction pressure Ps is lowered closer to a preset pressure. Conversely, when the refrigeration load is decreased and the suction pressure Ps becomes lower, the valve element 38 is displaced upward to increase the valve opening degree, and the compressor thus operates to reduce the discharging capacity. As a result, the suction pressure Ps is increased closer to the preset pressure. In this manner, the control valve 1 controls the discharging capacity of the compressor so that the suction pressure Ps becomes the preset pressure set by the solenoid 3.

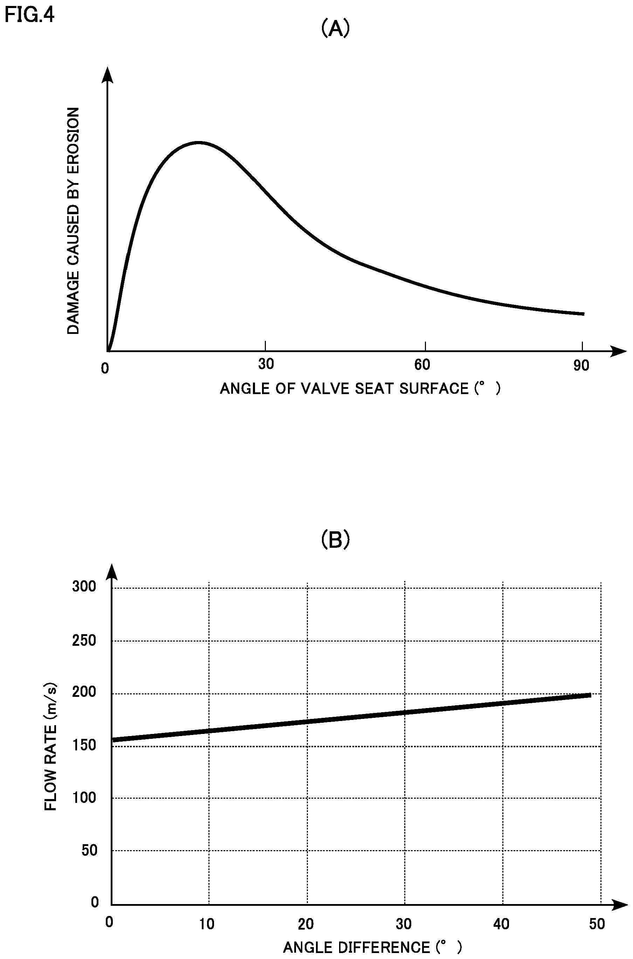

FIG. 4 illustrates graphs showing the relations of the angles of the valve element surface and the valve seat surface and prevention of erosion. FIG. 4(A) shows the relation between the angle of the valve seat surface 35 and erosion around the touching/leaving point P. In FIG. 4(A), the horizontal axis represents the angle (°) of the valve seat surface 35, and the vertical axis represents the degree of damage around the touching/leaving point P caused by erosion. Note that the "angle" used herein refers to the angle (first angle of inclination θ1) with respect to the axis as illustrated in FIG. 3(A). FIG. 4(B) shows the relation between the difference in angle between the valve element surface 39 and the valve seat surface 35 (θ2 - θ1) and the flow rate of refrigerant flowing near the touching/leaving point P during steady control. In FIG. 4(B), the horizontal axis represents the difference in angle (°), and the vertical axis represents the flow rate (m/s).

In a case where the refrigerant introduced through the port 14 (inlet port) flows in the axial direction of the valve hole 24 along the lateral side of the valve element 38 (actuating rod 36) as in the present embodiment, the relation as shown in FIG. 4(A) is obtained. Specifically, as the inclination angle (first angle of inclination θ1) of the valve seat surface 35 is smaller, the degree of damage caused by erosion is greater, and as the angle is larger (closer to 90 degrees), the degree of damage is smaller. The occurrence of erosion is considered to be mainly because foreign materials such as metal powder is contained in the refrigerant passing through the valve section at high speed. The foreign materials (solid particles) hit the valve seat surface causing wear due to powder. According to "Erosion·corrosion Nyumon / Nagare ga Motarasu Zairyorekkagensho" (Introduction to Erosion/corrosion - Material degradation phenomena caused by flow), Japan Industrial Publishing Co., Ltd., the most dominant factor of damage due to this type of erosion is the hitting angles of solid particles. In a case of ductile materials such as metal powder, the degree of damage is maximum at hitting angles between 20 degrees and 30 degrees, and becomes smaller as the hitting angles are closer to 90 degrees. This is because metal materials are more easily cut by corners of particles hitting at shallower angles.

In the case of the present embodiment, most of the refrigerant introduced through the port 14 reaches the lateral side of the valve element 38, changes its flowing direction by 90 degrees, and flows in the axial direction. A result in accordance with the aforementioned theory is thus obtained. For this reason, in view of erosion only, the angle of the valve seat surface 35 is preferably as close to 90 degrees as possible. In addition, in view of maintaining high valve opening performance to ensure a sufficient flow rate of refrigerant while the valve is open, the angle of the valve seat surface 35 is preferably larger. In contrast, in view of the fact that high seating performance of the valve element 38 onto the valve seat 32 should be maintained to prevent leakage of refrigerant while the valve is closed (leakage from the valve), the angle of the valve seat surface 35 is preferably smaller than 90 degrees. In a related art, the angle is often set at about 45 degrees in view of the seating performance. In view of the above, an angle of about 60 degrees (between 58 degrees and 62 degrees) at which the degree of damage caused by erosion tends to settle is employed in the present embodiment.

In addition, the inventors have focused on the possibility of causing a pressure drop between the entire valve seat surface 35 and the entire valve element surface 39 facing each other to lower the flow rate in the valve section by making the angle between the valve seat surface 35 and the valve element surface 39 small, and conducted evaluation as described below. FIG. 4(B) is obtained by setting the angle of inclination (first angle of inclination θ1) of the valve seat surface 35 to 60 degrees, and changing the angle between the valve seat surface 35 and the valve element surface 39 (the difference in angle between the first angle of inclination θ1 and the second angle of inclination θ2 (θ2 - θ1)). According to FIG. 4(B), it can be seen that the flow rate near the touching/leaving point P during steady control (that is, while the valve section is slightly open) is lower as the difference in angle (θ2 - θ1) is smaller. This means that the hitting speeds of the foreign materials at the touching/leaving point P of the valve seat surface 35 can be lowered, occurrence of cavitation can be prevented or minimized, and as a result, occurrence of erosion can be prevented or minimized.

According to analysis conducted by the inventors, it is found that the flow rate is preferably 170 m/s or lower, and more preferably 165 m/s or lower, in order to effectively reduce occurrence of erosion. If the difference in angle (θ2 - θ1) is zero, however, the valve element 38 is seated on the valve seat 32 in surface contact with the valve seat 32, and the pressure-receiving area of the valve element 38 becomes unstable, which may cause the above-described control as the Ps sensing valve to be unstable. The difference in angle (θ2 - θ1) is therefore set to 10 degrees or lower, and preferably between 3 degrees and 8 degrees. The angle of inclination of the valve element surface 39 (second angle of inclination θ2) is set to between 63 degrees and 67 degrees accordingly.

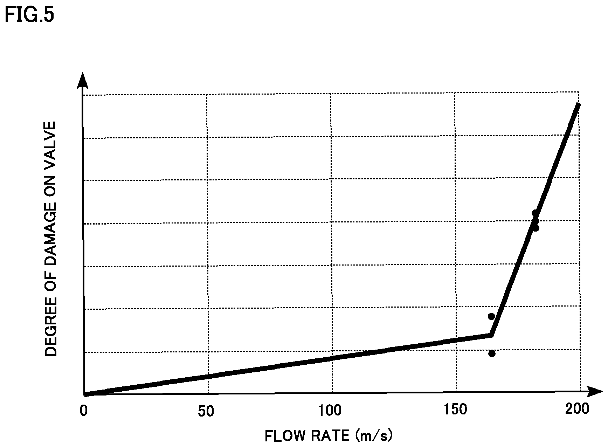

FIG. 5 is a graph showing results of experiments showing the relation between the flow rate of refrigerant passing through the valve section and the degree of damage on the valve. In FIG. 5, the horizontal axis represents the flow rate (m/s) of refrigerant flowing near the touching/leaving point, and the vertical axis represents results of quantification of the degree of damage caused by erosion on the valve seat surface near the touching/leaving point at predetermined times.

The results of experiments are consistent with the results of analysis indicating that the occurrence or erosion can be effectively reduced with a flow rate of refrigerant of 170 m/s or lower. Specifically, as a result of setting the difference in angle (θ2 - θ1) to 10 degrees or lower so that the flow rate becomes 170 m/s or lower, or more preferably 165 m/s or lower, the occurrence of erosion is effectively reduced and the operation of the compressor with maximum capacity is ensured.

As described above, in the present embodiment, the touching/leaving point P at which valve element 38 touches and leaves the valve seat 32 is near the outer end of the valve element surface 39, which is away from the inner end of the valve seat surface 35. In such a structure, the angle of inclination of the valve seat surface 35 is set to approximately 60 degrees, and the angle between the valve element surface 39 and the valve seat surface 35 at the downstream of the touching/leaving point P is set to 10 degrees or lower. As illustrated in FIG. 3(B), this suppresses the flow rate near the touching/leaving point P during steady control. As a result, the occurrence of erosion at the touching/leaving point P of the valve seat 32 is prevented or minimized, and leakage from the valve while the valve is closed and control failure due to such leakage are prevented or minimized.

The description of the present invention given above is based upon a certain embodiment. The embodiment is intended to be illustrative only and it will be obvious that various modifications could be further developed within the technical idea underlying the present invention.

In the embodiment described above, an example of a structure in which the valve element has a hollow structure and refrigerant having passed through the valve section is delivered to the downstream side through an inner passage of the valve element has been presented. In a modification, the structure of the valve section described above (that is, the structure in which the difference in angle between the valve element surface and the valve seat surface is 10 degrees or smaller) may be employed with a structure in which a valve element having a solid structure touches and leaves a valve seat.

In the embodiment described above, an example of a structure in which the inlet port is open at the lateral side of the body has been presented. In a modification, the structure of the valve section described above may be applied to a structure in which the inlet port is open at an end of body. The advantageous effects mentioned above are produced as long as refrigerant having been introduced in the valve chamber flows in the axial direction along the outer surface of the valve element.

In the embodiment described above, an example in which the control valve is a so-called Ps sensing valve that controls the capacity so that the suction pressure Ps of the variable displacement compressor is maintained at a preset pressure has been presented. The control technique and the controlled subject of the control valve according to the present invention, however, are not limited to the above. For example, the control valve may alternatively be a so-called Pc sensing valve in which the control pressure Pc is introduced through the port 16 and the capacity is controlled so that the control pressure Pc is maintained at a preset pressure.

In the embodiment described above, an example in which the control valve is a control valve that controls the flow rate of refrigerant introduced from the discharge chamber to the control chamber of the variable displacement compressor has been presented. The control valve may alternatively be a control valve that controls the flow rate of refrigerant delivered from the control chamber to the suction chamber.

In the embodiment described above, an example in which a multiple-plunger solenoid is used as the solenoid 3 has been presented, a solenoid including a single plunger may be employed. In this case, a pressure-sensing part may be provided between the actuating rod and the plunger or on a side opposite to the plunger with respect to the actuating rod.

In the embodiment described above, an example of the solenoid as an actuator for driving the valve section has been presented. In a modification, a stepping motor or other motors may be employed. Alternatively, a mechanical actuator such as a pressure-sensing part that senses a pressure and drives the valve section may be employed instead of an electric actuator.

In the embodiment described above, an example in which the variable displacement compressor is controlled and the control valve that controls the flow of refrigerant as working fluid has been presented. In a modification, the structure of the valve section described above may be applied to an expansion valve or other control valves. Alternatively, the structure of the valve section described above may be applied to a control valve that controls other working fluid containing solid particles.

The present invention is not limited to the above-described embodiment and modifications only, and the components may be further modified to arrive at various other embodiments without departing from the scope of the invention. Various other embodiments may be further formed by combining, as appropriate, a plurality of components disclosed in the above-described embodiment and modifications. Furthermore, one or some of all of the components exemplified in the above-described embodiment and modifications may be left unused or removed.

## Claims

1. A control valve comprising:
a body including a valve chamber, a valve hole communicating with the valve chamber in an axial direction, and an inlet port through which fluid is introduced into the valve chamber;
a valve seat provided at an open end of the valve hole; and
a valve element that has an outer surface extending in the axial direction, and touches and leaves the valve seat from the valve chamber side to close and open a valve section,
wherein the valve seat has a tapered valve seat surface that is inclined with respect to an axis of the valve hole,
wherein the valve element has a valve element surface facing the valve seat surface in the axial direction, and touches and leaves the valve seat surface at a position away from an inner end of the valve seat surface, and
wherein an angle between the valve element surface and the valve seat surface is 10 degrees or smaller at downstream of a touching/leaving point of the valve element.

2. The control valve according to claim 1, wherein the valve element surface is a tapered surface that is inclined at an angle larger than that of the valve seat surface with respect to the axis.

3. The control valve according to claim 1 or 2, wherein the angle between the valve element surface and the valve seat surface is between 3 degrees and 8 degrees.

4. The control valve according to any one of claims 1 to 3, wherein an angle of inclination of the valve seat surface with respect to the axis is between 58 degrees and 62 degrees.

5. The control valve according to any one of claims 1 to 4, wherein an angle of inclination of the valve element surface with respect to the axis is between 63 degrees and 67 degrees.
